# EUROPEAN PATENT APPLICATION

(11) **EP 4 375 889 A1**
(43) Date of publication of application: **29.05.2024**
(21) Application number: 22209154.8
(22) Date of filing: 23.11.2022
(51) Int. Cl.: G06N 20/00

(54) **COMPUTER-IMPLEMENTED METHOD FOR VALIDATING A TRAINED MACHINE LEARNING MODEL WITH REGARD TO ANY POTENTIAL MISCLASSIFICATION AND ASSOCIATED SAFETY-CRITICAL CONSEQUENCE**

(71) Applicant: Siemens Mobility GmbH, 81739 München (DE)
(72) Inventor: Bahlmann, Claus, 10707 Berlin (DE); Guo, Zhensheng, 85659 Forstern (DE); Rothbauer, Stefan, 86156 Augsburg (DE); Rothfelder, Martin, 80469 München (DE); Zeller, Marc, 81243 München (DE)
(74) Representative: Siemens Patent Attorneys

(57) **Abstract**

The invention relates to a computer-implemented method for validating a trained machine learning model with regard to any potential misclassification and associated safety-critical consequence, comprising the steps comprising the steps a. providing the trained machine learning model (S1); b. providing a validation data set comprising a plurality of data elements to be classified (S2); wherein the validation data set is a representative validation data set for a safety-critical application ; c. determining an output vector with a plurality of probabilities using the trained machine learning model for classifying each data element based on the validation data set (S3); d. assigning a plurality of penalties to the classified data elements using at least one rule based on the output vector (S4); wherein the penalty is assigned to each classified data element of the plurality of classified data elements; wherein the penalty indicates a severity and/or an impact of a misclassification considering at least one associated safety-critical consequence; e. determining a quality criterium for the trained machine learning model based on the assigned penalties (S5); f. verifying that the determined quality criterium lies within a pre-defined range and/or meets a pre-defined threshold (S6); and g. providing the verified quality criterium and/or the validated machine learning model (S7) .

Further, the invention relates to a corresponding computer program product and system.

## Description

Independent of the grammatical term usage, individuals with male, female or other gender identities are included within the term.

### 1. Technical field

The present invention relates to a computer-implemented method for validating a trained machine learning model with regard to any potential misclassification and associated safety-critical consequence. Further, the invention relates to a corresponding computer program product and technical system.

### 2. Prior art

Autonomous driving gains in importance. Diverse autonomous vehicles, such as cars and trains are known from the prior art in this context. The autonomous vehicles are configured to operate in an autonomous mode, according to which the vehicle navigates through an environment with little or no input from a driver. Most often, the autonomous vehicles are configured to operate driverless, they are hence self-driving.

Such an autonomous vehicle typically comprises one or more sensors, that are configured to sense information about their environment. Moreover, the autonomous vehicle uses one or more safety-critical applications for diverse functions, such as navigation through the environment. For example, if the sensor senses that the autonomous vehicle approaches an obstacle, the autonomous vehicle will automatically navigate around the obstacle by means of the safety-critical application. Exemplary safety-critical functions are e.g. steering, accelerating and braking.

To date, however, it remains a challenge to prevent unexpected consequences, such as accidents caused by the autonomous vehicles. For example, the obstacle is a human person and is not detected in a timely manner or the navigation does not work properly. Thus, severe accidents can be caused by the autonomous vehicle e.g. due to a malfunction of the underlying safety-critical application. In the worst case, the affected human person is severely injured by the approaching autonomous vehicle. In other words, the human-machine interaction is affected leading to human injuries.

Another example is directed to industrial plants. The increasing degree of automation allows for manufacturing or industrial installation of products in a production line of the industrial plant to be performed by robot units or other autonomous units in an automatic manner and thus efficiently at least in part up to now. The malfunction of the safety-critical application running on the robot unit often has a negative impact on the industrial plant and can lead to a fall out of the associated robot unit in the manufacturing process. This disadvantageously results in downtimes of the industrial plant and tremendous costs.

Moreover, machine learning is well known from the prior art in context of Artificial Intelligence. According to which, the Artificial Intelligence systems are software programs whose behavior is learned from data instead of being explicitly programmed. The learning process is called "training" which requires plenty of data and significant computational resources. Thereby, the trained machine learning model solves a specific task for which it was trained, such as classification. In other words, the trained machine learning models are configured to classify the data elements.

According to prior art, however, misclassifications have serious impacts in the aforementioned safety-critical applications since the machine learning models do not consider their consequences sufficiently. Usually, for this reason, the machine learning models cannot be used for safety-critical applications on their own. Moreover, there is currently no well established approach to provide a safety proof for AI-based systems.

Hence, one technical solution suitable for the person skilled in the art to make use of machine learning model in safety-critical applications would be to process the data by conventional algorithmic means in addition, especially data during runtime. This solution, however, affords to run two approaches, namely the conventional approach and the machine learning model to detect any deviations. The disadvantage of this solution is that it is time-consuming and expensive.

It is therefore an objective of the invention to provide a computer-implemented method for validating a trained machine learning model with regard to any potential misclassification and associated safety-critical consequence, which is more efficient and more reliable.

### 3. Summary of the invention

This problem is according to one aspect of the invention solved by a computer-implemented method for validating a trained machine learning model with regard to any potential misclassification and associated safety-critical consequence, comprising the steps of:
a. providing the trained machine learning model;
b. providing a validation data set comprising a plurality of data elements to be classified; wherein the validation data set is a representative validation data set for a safety-critical application;
c. determining an output vector with a plurality of probabilities using the trained machine learning model for classifying each data element based on the validation data set;
d. assigning a plurality of penalties to the classified data elements using at least one rule based on the output vector; wherein
   the penalty is assigned to each classified data element of the plurality of classified data elements; wherein
   the penalty indicates a severity and/or an impact of a misclassification considering at least one associated safety-critical consequence;
e. determining a quality criterium for the trained machine learning model based on the assigned penalties;
f. verifying that the determined quality criterium lies within a pre-defined range and/or meets a pre-defined threshold; and
g. providing the verified quality criterium and/or the validated machine learning model.

Accordingly, the invention is directed to a computer-implemented method for validating a machine learning model. The machine learning model can be equally referred to as classification model, machine-learning classifier or classifier in the common sense of machine learning. Thereby, the machine learning model is already trained with training data as usual.

This machine learning model undergoes a validation in view of data elements or data items which are potentially misclassified, wherein the misclassifications can lead to safety-critical consequences.

The term "penalty" is a measure for the consequence or damage incurred by a misclassification. The term "risk" is the product of the probability and the consequence.

First, the input data is provided, namely the trained machine learning model and the validation data set. The validation data set is an independent input data set, which is used as validation data set to validate the trained machine learning model. Hence, the training data set and the validation data set are separate or disjunct from each other as known in the prior art in context of machine learning. Further, importantly, the validation data set is representative for the safety-critical application according to the invention. It is ensured, that the safety-critical application and associated specific use case are covered by the validation data set and/or the validation data set comprises enough data elements in view of potential misclassifications and/or combinations of misclassifications. In other words, the quality and/or quantity of the validation data set is preferably evaluated. The evaluation can depend on the circumstances and/or requirements, such as specific use case, specific safety-critical application and technical system.

The provided validation data set is classified using the trained machine learning model. This classification results in the output vector, which comprises a plurality of probabilities.

Then, the penalties are assigned to the classified data elements of the plurality of data elements using one or more rules based on the output vector. Thereby, the penalties are important since they are indicative for the severity and/or the impact of the misclassification. The misclassification is associated with one or more safety-critical consequences, such as risks or hazards. This assignment ensures that the misclassifications are detected and penalized.

The individual assigned penalties are further processed to generate the quality criterium for the whole validation data set.

In other words, the penalty can be considered as assessment criteria. Thereby, correctly classified data elements are assigned to penalties, preferably positive values or zero. Misclassified data elements are not correctly classified and are assessed depending on their consequences, preferably negative values. This way, both correct and non-correct classifications are incorporated in the quality criterium.

The quality criterium and/or validated machine learning model is provided as output.

Contrary to the prior art, the method according to the invention takes the consequences of misclassifications into account in the form of the quality criterium. Hence, the expected damages, the risks or the like are considered. This way, the reliability of the safety-critical application is significantly improved. Moreover, measures to reach a safe state and prevent the safety-critical consequences can be taken in a timely manner. Accordingly, the aforementioned human-machine interaction is more reliable.

In an aspect the trained machine learning model, the validation data set, the at least one rule and/or other data is received by means of an input interface. Accordingly, the input data sets can be received via the input interface. Additionally or alternatively, the output data sets can be sent or transmitted by means of an output interface. The advantage is that the data sets can be transmitted efficiently, preferably in a bidirectional fashion and data traffic is reduced.

In a further aspect the trained machine learning model is a Neural Network, a Boosted Classifier, a Decision Tree, a Random Forest, a Logistic Regression or a Support Vector Machine.

. Accordingly, the trained machine learning model is a supervised machine learning model. The specific supervised machine learning model can be selected in a flexible manner according to the specific safety-critical application, the underlying technical system, the use case and/or the user requirements. The neural networks have proven to be advantageous since they provide high reliability in recognition, can be trained flexibly and offer fast evaluation.

In a further aspect the validation data set is an evaluated validation data set, wherein the evaluated validation data set comprises a sufficient number of safety-critical data elements in view of potential misclassifications and/or combinations of potential misclassifications. Accordingly, the validation data set is evaluated regarding critical cases for the application specific use cases. The evaluation ensures that the quality of the data basis or input for the validation is sufficient or of good quality and/or quantity.

The validation results depend on the quality of the validation data set. Hence, this evaluation also results in a more reliable verification, verified quality criterium and hence validated machine learning model.

In a further aspect the at least one rule is a risk-matrix. Accordingly, the risk-matrix is a matrix with rows and columns. The risk matrix assigns each pair of possible prediction to the correct prediction the resulting class of consequence based on the impact the misclassification has e. g. with regard to safety. In other words, the risk-matrix is mapped to the penalties.

In a further aspect the risk-matrix is obtained by means of a model-based approach. Accordingly, the risk-matrix can be determined manually or automatically. The risk-matrix can be input via a user interface by a user or received via the input interface from a computing unit. The risk-matrix can be determined by the user or expert with manual effort. Alternatively or additionally it can be determined using the model-based approach without any user interaction and manual need.

In a further aspect the safety-critical consequence is a consequence selected from the group comprising:
a hazard, a risk and a damage.

Accordingly, the consequence can be also considered as impact, event or the like and is importantly safety-critical. An exemplary safety-critical consequence is a risk. Thereby, the risk can be associated with e.g. human health, threat to a human or decreased performance of a technical system, such as reliability or throughput of the aforementioned exemplary autonomous vehicle and/or robot unit.

In a further aspect the quality criterium is the sum of the plurality of penalties, the average penalty of the plurality of penalties, the maximum penalty or minimum penalty of the plurality of penalties. Accordingly, the assigned penalties are combined or processed into the verified quality criterium. The quality criterium can be equally referred to as total or overall penalty. The quality criterium covers the penalties, or in other words, is representative for the penalties and hence whole validation data set.

In a further aspect, the method further comprises
- adapting a loss function of the validated machine learning model;
- re-training the validated machine learning model using the adapted loss function;
- training the validated machine learning model using the adapted loss function; and/or
- extending the validation data set and/or a training data set, wherein the training data set is used for training the validated machine learning model, with at least one additional data element.

Preferably the re-training, the training and/or the extension depend on the verified quality criterium, the validated machine learning model and/or the at least one rule, wherein the rule is preferably the risk-matrix.

In a further aspect the re-training, the training and/or the extension are performed in the case that the verified quality criterium is outside the pre-defined range and/or does not meet the pre-defined threshold. The verified quality criterium does not meet the pre-defined threshold in the event that the quality criterium e.g. exceeds or stays below the pre-defined threshold. According to this aspect, the validated machine learning model is not released for use, hence rejected.

In a further aspect, the method further comprises
- applying the validated machine learning model on application data, wherein the application is the safety-critical application; and/or
- confirming the verified quality criterium and/or validated machine learning model for application.

In a further aspect the application and/or the confirmation is performed in the case that the verified quality criterium lies within the pre-defined range and/or meets the pre-defined threshold. Accordingly, the application and/or confirmation depend on the verified quality criterium, the validated machine learning model and/or the at least one rule. According to this aspect, the validated machine learning model is released for use.

In a further aspect, the method further comprises
- outputting the verified quality criterium, the validated machine learning model and/or any other related notification;
- storing the verified quality criterium, the validated machine learning model and/or any other related notification;
- displaying the verified quality criterium, the validated machine learning model and/or any other related notification;
- transmitting the verified quality criterium, the validated machine learning model and/or any other related notification to a computing unit; and/or
- triggering at least one measure to reach a safe state.

Accordingly, the input data, data of intermediate method steps and/or resulting output data in the form of the quality criterium and/or validated machine learning model can be further handled. Therefore, the method according to an embodiment comprises one or more additional or alternative method steps.

This way, the steps can be flexibly selected and triggered in an efficient manner.

Alternatively, any of the aforementioned method steps can depend on other criteria, such as safety-critical application, use case and user requirements etc.

Moreover, any of the aforementioned method steps can be performed by one or more computing units of the technical system. The method steps can be performed gradually or simultaneously. The method steps include e.g. storing and processing steps. The advantage is that appropriate steps can be taken in a timely manner to reach the safe state. According to an embodiment, the safety-critical application can be released whenever the safe state is reached.

For example, a notification related to the quality criterium can be outputted and/or displayed to a user by means of a display unit. The quality criterium in the form of the weighted average of the penalties can be e.g. displayed with further information. The notification can indicate that the quality criterium is not sufficient for the safety-critical application since e.g. it lies outside the pre-defined range. The notification might further indicate instructions, including e.g. information about the expected damage to humans or the technical system and/or further steps to be performed e.g. training or retraining.

In other words, the verified quality criterium can be within the pre-defined range and/or meet the pre-defined threshold. This means, that the quality criterium is sufficient for the safety-critical application. Hence, the output can be confirmed and used. Referring to the above safe state, the safe state is achieved and the safety-critical application can be used.

Alternatively, the verified quality criterium is not within the pre-defined range and/or does not meet the pre-defined threshold. This means, that the quality criterium is not sufficient for the safety-critical application. Hence, the output cannot be confirmed and should not be used. The safe state is not guaranteed. The safety-critical application should be prevented from being used. Appropriate method steps can be initiated, such as the aforementioned training and/or re-training step. Alternative appropriate method steps can be the transmission of a notification to a computing unit to adapt the steering or controlling of a technical unit.

A further aspect of the invention is a computer program product directly loadable into an internal memory of a computer, comprising software code portions for performing the steps according to any one of the preceding claims when said computer program product is running on a computer.

A further aspect of the invention is a technical system for performing the aforementioned computer-implemented method.

### 4. Short description of the drawings

In the following detailed description, presently preferred embodiments of the invention are further described with reference to the following figures:

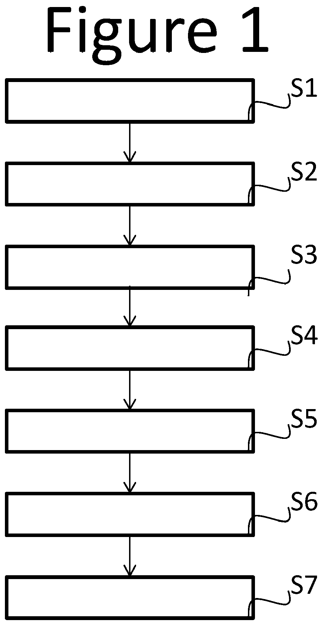

Fig. 1 illustrates a flowchart of the method according to the invention.
Fig. 2 illustrates a risk-matrix according to an embodiment.

### 5. Detailed description of preferred embodiments

According to an embodiment, one or more processing steps can pe performed before running the method according to the invention for validating a trained machine learning model with regard to any potential misclassification and associated safety-critical consequence, such as risk-assessment and evaluation.

### Risk-assessment

The risk-assessment of the classification can be performed, which is preferably application specific. The risk-assessment ca be performed manually in the case that there are only a manageable number of classification categories. Additionally or alternatively a model-supported risk assessment can be used. The model-supported risk assessment has proven to be advantageous in view of a larger number of classification categories and is more efficient.

For example, if each category corresponds to a value (range) of a physical quantity, a misclassification will result in a wrong value (range) for the physical quantity. The potential impact and/or severity can be deduced based on the physical models within a known context.

### Exemplary implementation of the model-supported risk assessment

According to an embodiment the model-supported risk assessment can be used to evaluate the severity of the consequences. The model-supported risk assessment requires physical models that can estimate the consequences given wrong classifications. For example, higher speed would lead to more kinetic energy and potentially more severe consequences in case of an accident. Accordingly, this model-based approach uses the predicted and correct labels as input. Further, the approach provides the severity of the consequence of the predicted label given the correct label as output.

### Evaluation of the validation data set

According to an embodiment, the validation data set is evaluated. Additionally or alternatively, the training data set can be evaluated.

It can be evaluated whether the validation data set comprises sufficient or enough critical cases for the application specific use cases, wherein critical misclassifications are possible.

Moreover, it can be verified that the validation data set is representative for the safety-critical application.

Moreover, it can be ensured that enough validation data is available for all combinations of potential misclassifications, in particular the critical misclassifications.

Moreover, it can be verified whether the respective a priori properties (i.e. how frequent are the corresponding "true" cases in actual operation) are known and represented.

Moreover, it can be verified that the applications Operational Design Domain ("ODD") is covered by the data.

According to an embodiment, if the data is not sufficient, more data will be collected and the data will be reevaluated.

Determining the verified quality criterium and/or the validated machine learning model

In the first method steps S1 and S2, the input data is received, namely the trained machine learning model and the validation data set.

The trained machine learning model is used for classifying each data element based on the validation data set S3. This results in the output vector with probabilities pi, with I = 1 to n.

Then, the penalties are assigned to the classified data elements using the at least one rule based on the output vector S4.

In other words, the data elements are assigned to categories ci, with i = 1 to n, and penalties.

The penalty indicates the severity and/or the impact of the misclassification considering the at least one associated safety-critical consequence. Accordingly, the penalty can be equally referred to as risk.

### Exemplary implementation of the at least one rule

According to an embodiment, the penalty is assigned to each potential classification ci assuming a different correct classification, e. g. for the most likely classification c_i , assume that the next likely classification c_j is correct and base penalty on this misclassification.. In this step, the correct classification is not known.

According to another embodiment, a qualitative approach can be used as rule. For each predicted classification ci, the maximum severity is applied. Alternatively the maximum for each classification with a probability pi that is considered relevant is applied. This allows to filter out certain very unlikely classifications.

According to another embodiment, a quantitative approach can be used as rule. A mapping can be defined from severity to a quantitative damage value. For each potential classification, an approach is used that sums the "expected" damages (weighted sum of damage by "probability" pi, or some factor based on probability pi).

The simplest way to obtain a quantitative value would be a mapping of severities to damages, e. g. monetary losses (or equivalent). If the application permits it, a model-based way could be used, e. g. based on physical models using the classification.

Exemplary measures for the misclassification are a) maximum value b) mapping severities to damages and averaging by probability pi c) mapping, but filtering out unlikely events (e. g. all ci, where pi is less than a certain limit).

Then, the quality criterium is determined based on the penalties and is verified S5, S6. Thereby, a measure can be applied to cover the total damage of the application over the whole validation data set. Exemplary measures are average over the whole validation set and weighted average (specify the relative importance of each element of the validation data set to give a reasonable weight).

The verified quality criterium and/or the validated machine learning model is provided as output S7.

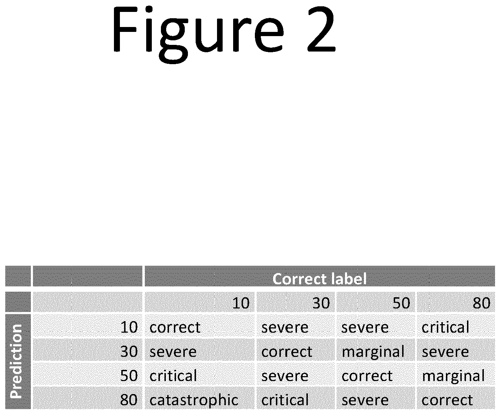

Fig. 2 illustrates a qualitative risk-matrix according to an embodiment. According to this embodiment, correct corresponds to 0, severe corresponds to -100, critical corresponds to - 10.000 and catastrophic corresponds to -1.000.000. The disadvantage is that specific scenarios are not covered. Therefore, the correct label pairs can be considered. This way, the relevant scenarios will be better addressed. This improvement results in a risk-matrix similar to the qualitative risk-matrix, but with quantitative entries (not shown).

## Claims

1. Computer-implemented method for validating a trained machine learning model with regard to any potential misclassification and associated safety-critical consequence,
comprising the steps:
a. providing the trained machine learning model (S1);
b. providing a validation data set comprising a plurality of data elements to be classified (S2); wherein
the validation data set is a representative validation data set for a safety-critical application ;
c. determining an output vector with a plurality of probabilities using the trained machine learning model for classifying each data element based on the validation data set (S3);
d. assigning a plurality of penalties to the classified data elements using at least one rule based on the output vector (S4); wherein
the penalty is assigned to each classified data element of the plurality of classified data elements; wherein
the penalty indicates a severity and/or an impact of a misclassification considering at least one associated safety-critical consequence;
e. determining a quality criterium for the trained machine learning model based on the assigned penalties (S5);
f. verifying that the determined quality criterium lies within a pre-defined range and/or meets a pre-defined threshold (S6); and
g. providing the verified quality criterium and/or the validated machine learning model (S7).

2. Computer-implemented method according to claim 1, wherein the trained machine learning model, the validation data set, the at least one rule and/or any other data is received by means of an input interface.

3. Computer-implemented method according to claim 1 or claim 2, wherein the trained machine learning model is a Neural Network, a Boosted Classifier, a Decision Tree, a Random Forest, a Logistic Regression, or a Support Vector Machine.

4. Computer-implemented method according to any of the preceding claims, wherein the validation data set is an evaluated validation data set, wherein
the evaluated validation data set comprises a sufficient number of safety-critical data elements in view of potential misclassifications and/or combinations of potential misclassifications.

5. Computer-implemented method according to any of the preceding claims, wherein the at least one rule is a risk-matrix.

6. Computer-implemented method according to any of the preceding claims, wherein the risk-matrix is obtained by means of a model-based approach.

7. Computer-implemented method according to any of the preceding claims, wherein the safety-critical consequence is a consequence selected from the group comprising:
a hazard, a risk and a damage.

8. Computer-implemented method according to any of the preceding claims, wherein the quality criterium is the sum of the plurality of penalties, the average penalty of the plurality of penalties, the maximum penalty or minimum penalty of the plurality of penalties.

9. Computer-implemented method according to any of the preceding claims, further comprising
- adapting a loss function of the validated machine learning model;
- re-training the validated machine learning model using the adapted loss function;
- training the validated machine learning model using the adapted loss function; and/or
- extending the validation data set and/or a training data set, wherein the training data set is used for training the validated machine learning model, with at least one additional data element.

10. Computer-implemented method according claim 9, wherein the adaptation, the re-training, the training and/or the extension is performed in the case that the determined quality criterium is outside the pre-defined range and/or does not meet the pre-defined threshold.

11. Computer-implemented method according to any of the preceding claims, further comprising
- applying the validated machine learning model on application data, wherein the application is the safety-critical application; and/or
- confirming the verified quality criterium and/or validated machine learning model for application.

12. Computer-implemented method according claim 11, wherein the application and/or the confirmation is performed in the case that the verified quality criterium lies within the pre-defined range and/or meets the pre-defined threshold.

13. Computer-implemented method according to any of the preceding claims, further comprising
- outputting the verified quality criterium, the validated machine learning model and/or any other related notification;
- storing the verified quality criterium, the validated machine learning model and/or any other related notification;
- displaying the verified quality criterium, the validated machine learning model and/or any other related notification;
- transmitting the quality criterium, the validated machine learning model and/or any other related notification to a computing unit; and/or
- triggering at least one measure to reach a safe state.

14. A computer program product directly loadable into an internal memory of a computer, comprising software code portions for performing the steps according to any one of the preceding claims when said computer program product is running on a computer.

15. Technical system for performing the method according to claims 1 - 13.
